# EUROPEAN PATENT APPLICATION

(11) **EP 4 711 308 A1**
(43) Date of publication of application: **18.03.2026**
(21) Application number: 24199675.0
(22) Date of filing: 11.09.2024
(51) Int. Cl.: B65G 15/34, B65G 43/02

(54) **BELT PROVIDED WITH A DEVICE FOR RADIOFREQUENCY COMMUNICATION, HAVING A HIGH RELIABILITY**

(71) Applicant: Ammega Group AG, 6312 Steinhausen (CH)
(72) Inventor: SARI, Naci, 6312 STEINHAUSEN (CH)
(74) Representative: Studio Torta S.p.A.

(57) **Abstract**

A belt (2) is provided which comprises a running body (6) and a device (13) for radiofrequency communication, carried by the running body. The device comprises an electronic module (15) configured to receive and transmit radiofrequency signals; and a plurality of conductive wires (17) configured to be inductively coupled with the electronic module and arranged so as to form a frame portion (20). The electronic module (15) is arranged within the frame portion (20) .

## Description

### TECHNICAL FIELD

The present invention relates to a belt provided with a device for radiofrequency (RF) communication, having a high reliability.

### BACKGROUND OF THE INVENTION

As is known, belts are widely used in transmission systems, product conveyors, and in lifts or cabins for dragging and support thereof.

Also known are belts provided with a transponder, which is an electronic device for radiofrequency communication that can notify wear conditions of the belt to an external RF reader.

For example, a transponder can be used as an electronic identification tag instead of barcodes or QR codes.

With respect to barcodes and QR codes, electronic tags based on RF signals do not require an optical scan to be read.

However, the Applicant has verified that in the known belts provided with a transponder, the transponder is subject to damage and failure, thereby causing problems or interruptions in the communication with the external reader.

In particular, damage and failure of the transponder occur when the belt is used in a bending conveyor belt, or in specific operating conditions such as high operating temperature, high speed and high pressure.

Therefore, the need is felt to provide an improved belt that has a high reliability and robustness in a wide range of applications.

An aim of the present invention is to satisfy the above-mentioned needs in a cost-effective and optimized manner.

### SUMMARY OF THE INVENTION

The aforementioned aim is reached by a belt, as defined in the appended set of claims.

### BRIEF DESCRIPTION OF DRAWINGS

For a better understanding of the present invention, preferred embodiments are now described, by way of nonlimiting examples, with reference to the attached drawings wherein:
- Figure 1 is a partial prospective view of a system comprising a belt according to an embodiment of the present invention;
- Figure 2 is a schematic cross-section of the system of Figure 1 along section line II-II of Figure 1;
- Figure 3 is a schematic top-plan view of a device for radiofrequency communication of the belt of Figures 1 and 2;
- Figure 4 is an exploded perspective view of a portion of the belt of Figures 1 and 2;
- Figure 5 is a schematic diagram of an electronic module for RF communication of the belt of Figures 1 and 2, according to an embodiment; and
- Figure 6 is a partial top plan view of the belt of Figure 1, according to an embodiment.

### DETAILED DESCRIPTION OF THE INVENTION

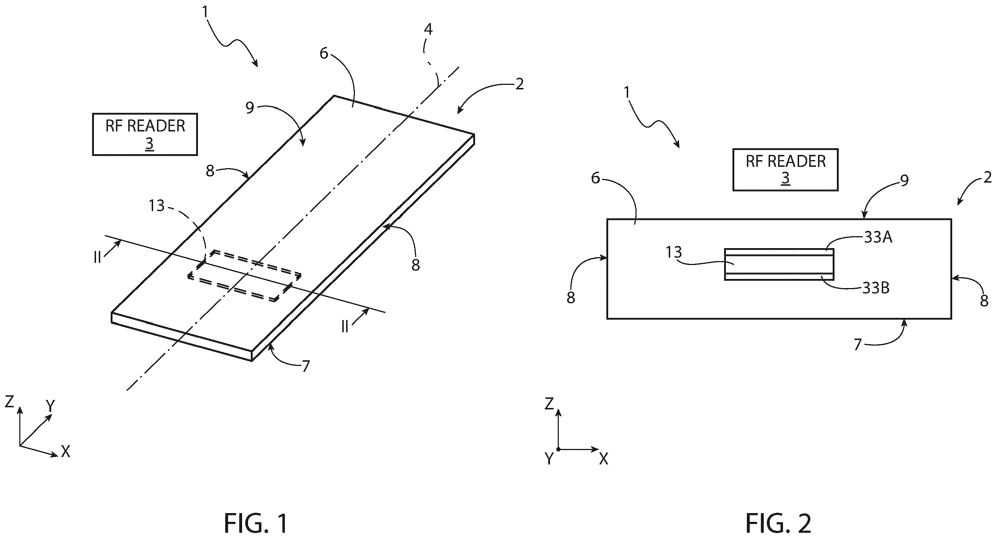

Figures 1 and 2 show a system 1 comprising a belt (partially illustrated) 2 and a radiofrequency (RF) reader 3.

The system 1 is shown schematically in a Cartesian reference system having axis X, Y and Z.

The belt 2 may be used for power transmission, products conveyance, etc.

In particular, the belt 2 may be used for goods transport in industrial logistic applications, such as in warehouses, distribution centers and factories; in the food processing industry for processing and moving food items; in postal and parcel services for sorting and distribution; or for materials moving in heavy industries such as mining and construction.

The belt 2 may form a continuous (closed) loop and, in use, may be coupled to transmission wheels including a driving pulley and at least one driven pulley.

The belt 2 extends along a longitudinal axis 4 (parallel to the axis X in the example of Figure 1) and is flexible so as to follow curved paths, depending on the specific application of the belt 2.

The belt 2 comprises a running body 6 delimited by a back face 7; two lateral faces 8 opposite to each other and transversal to the back face 7; and a front face 9 opposite to the back face 7.

The back face 7 or the front face 9 may be configured to engage an external surface of the transmission wheels.

For example, the back face 7 and/or the front face 9 may be provided with teeth, protrusions, etc. or be flat, depending on the specific coupling mechanism of the belt 2 with the transmission wheels.

The running body 6 may be formed by one or more layers, for example of polymeric or elastomeric material, for example polyurethane or a thermoplastic elastomer.

The running body 6 may also comprise other layers of different materials, depending on the specific application.

For example, the belt 2 may comprise, within the running body 6, a plurality of chords for mechanical reinforcing, such as of steel, aramid, carbon, glass fiber or other synthetic fibers, in particular extending longitudinally parallel to the longitudinal axis 4.

The RF reader 3 may be a transceiver. For example, the RF reader 3 may be a smartphone, tablet, or other known electronic device configured for RF communication.

In the specific example of Figures 1 and 2, the RF reader 3 is placed above the front surface 9, facing the front surface 9. However, the RF reader 3 may be arranged, relative to the belt 2, at a different position.

For example, the RF reader 3 may be arranged at a distance lower than 1 m from the belt 2.

The belt 2 comprises a device 13 for radiofrequency communication, carried by the running body 6.

In practice, the device 13 is configured to communicate (wirelessly) via radiofrequency signals with another external device, here the RF reader 3.

In this embodiment, the device 13 is completely embedded within the running body 6. However, the device 13 may be only partially embedded within the running body 6.

For illustration purposes, in Figures 1 and 2, the dimensions of the device 13 are comparable with the dimensions of the running body 6. However, generally, the device 13 may be much smaller than the running body 6, depending on the specific application of the belt 2.

In Figure 2, by way of example only, the device 13 is placed substantially at a center position of the running body 6. However, the device 13 may be placed closer to the front surface 9 than to the back surface 7 or the other way around. Moreover, the device 13 may be placed closer to either one of the two lateral faces 8.

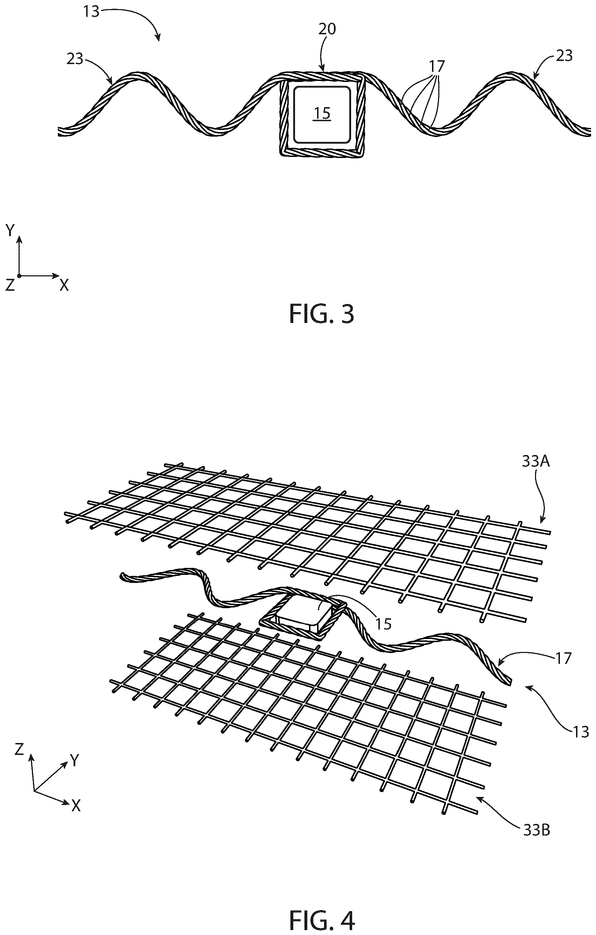

The device 13 comprises (Figure 3) an electronic module 15, which is configured to transmit and receive RF signals for communicating with the RF reader 3, and a plurality of conductive wires 17, which are inductively coupled with the electronic module 15.

The electronic module 15 is configured to send data, in particular data stored in the electronic module 15, for example identification data, data measured by dedicated sensors of the device 13, etc., to the RF reader 3, via RF signals.

Preferably, the electronic module 15 may be configured to operate in the Ultra High Frequency (UHF) band, for example ranging from about 865 MHz to about 928 MHz.

For example, the electronic module 15 may be configured to communicate with the RF reader 3 through Bluetooth, NFC or other known wireless communication technologies; in particular, through NFC.

Preferably, the electronic module 15 may be a transponder configured to transmit an RF signal to the RF reader 3 only in response to an RF signal received from the RF reader 3.

In particular, the electronic module 15 is a transponder for radiofrequency identification (RFID).

Preferably, the electronic module 15 may be a passive transponder.

By way of example only, the electronic module 15 may have, on an XY plane, a size of about 1.2 mm x 1.2 mm and, along axis Z, a thickness of about 0.55 mm.

The conductive wires 17 are of conductive material, for example copper (e.g., black copper) or other conductive materials such as metals or alloys.

As shown in the embodiment of figure 3, the conductive wires 17 may be twisted with each other; this may help improving the robustness and reliability of the device 13.

The conductive wires 17 are arranged so as to form a frame portion 20. The electronic module 15 is arranged within the frame portion 20.

In detail, the frame portion 20 extends around the electronic module 15, in particular by surrounding the electronic module 15.

The frame portion 20 may comprise one or more turns around the electronic module 15.

Preferably, the frame portion 20 is not in direct electrical contact with the electronic module 15. In other words, the belt 2 does not have any physical wiring that electrically connects the electronic module 15 with the conductive wires 17. This may help improving the robustness and reliability of the device 13.

In particular, the frame portion 20 may arranged at a distance from the electronic module 15.

The device 13 may comprise from two to five conductive wires 17. Preferably, the device 13 may have four conductive wires 17. The Applicant has verified that, surprisingly, the specific number of four conductive wires 17 may help improving the robustness and reliability of the device 13.

The conductive wires 17 may each have a thickness, e.g., a diameter in case of wires having a circular cross-section, from 0.10 mm to 0.15 mm. The Applicant has verified that, surprisingly, said specific diameter range of the conductive wires 17 may help improving the robustness and reliability of the device 13.

In the embodiment of Figure 3, the conductive wires 17 are also arranged so as to form two (optional) protruding portions 23 extending from the frame portion 20 away from the electronic module 15, in particular along a direction parallel to the X axis in Figure 3, towards two opposite sides of the electronic module 15.

The length of the protruding portions 23 along axis X may be a function of the frequency operating band of the electronic module 15, for example the length of each protruding portion 23 along axis X may be from 20 mm to 100 mm.

The protruding portions 23 follow a curved path; in particular, the protruding portions 23 may each have a sinusoidal shape having a periodicity that depends on the frequency operating band of the electronic module 15.

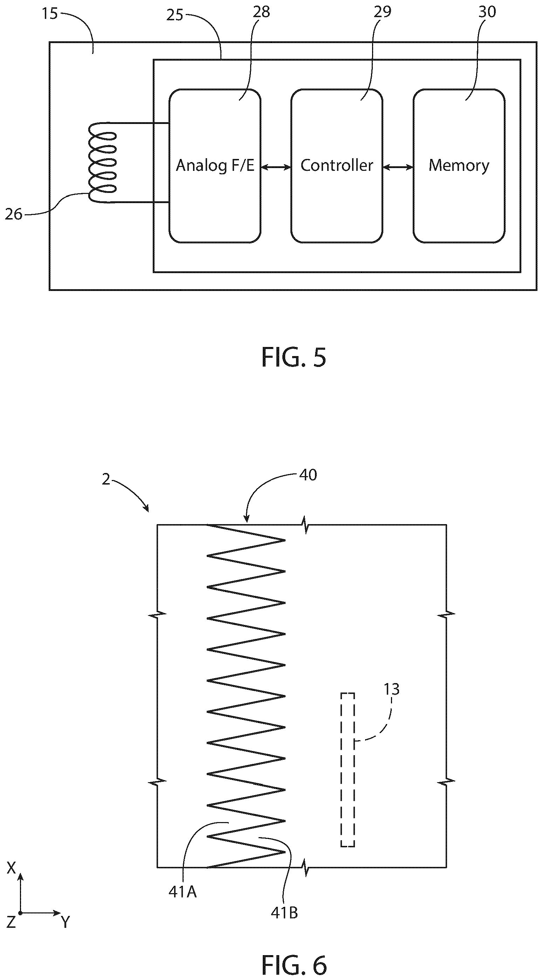

With reference to Figure 5, a detailed embodiment of the electronic module 15 is herein described.

The electronic module 15 comprises an integrated circuit 25 and an antenna 26, electrically coupled with each other.

In particular, the antenna 26, for example an electrically conductive coil, may be in direct electrical contact (wired) with the integrated circuit 25.

The conductive wires 17 are configured to be inductively coupled with the antenna 26 so as to exchange RF signals with the antenna 26.

In detail, the integrated circuit 25 comprises an analogic front end 28, a controller 29 and a memory 30, mutually coupled with each other.

The analogic front end 28, which may be directly coupled with the antenna 26, may be configured to perform various signal processing steps including analog-to-digital and/or digital-to-analog conversion of electrical signals to be received from and sent to the antenna 26.

The memory 30 may store the data to be sent to the RF reader 3, such as identification data of the belt 2 (e.g., manufacturing date, installation date, technical features, etc.) and/or other useful data, depending on the specific application.

The controller 26 may comprise one or more processors configured to regulate functioning of the electronic module 15.

With reference to figure 2 and the exploded view of Figure 4, the device 13 may further comprise a reinforcing structure, which is formed in this embodiment by two meshes 33A, 33B extending respectively above and below the device 13, embedding the electronic module 15 and the conductive wires 17.

In other words, the reinforcing structure 33A, 33B supports the electronic module 15 and the conductive wires 17.

The reinforcing structure 33A, 33B, preferably of fiber glass, is a protective structure for mechanical reinforcement of the device 13.

In detail, the reinforcing structure 33A, 33B may be coupled (in particular, fixed, for example with a specific glue) with the electronic module 15 and the conductive wires 17.

The meshes 33A, 33B may be sized so as to cover the whole device 13 (e.g., both the electronic module 15 and the conductive wires 17).

According to an embodiment, Figure 6, the device 13 may be embedded, within the running body 6, in proximity of a seam (or finger joint) 40 of the belt 2 and at a distance from the seam 40, in particular at a distance of at least 30 mm from the seam 40, so as to achieve a high stability.

The seam 40 is the portion of the belt 2 wherein the two ends 41A, 41B of the belt 2 are joint together so as to form a closed loop.

The conductive wires 17, which are inductively coupled with the antenna 26, act as an additional antenna of the electronic module 15, thereby improving the communication range and/or sensitivity of the electronic module 15 with respect to the RF reader 3.

In particular, the device 13 may ensure a high communication reliability with the RF reader even when the belt 2 is driven at a high speed, for example up to 250 m/min.

Moreover, the fact that the conductive wires are inductively coupled, and in particular are not in direct electrical contact with, the antenna 26, allows the device 13 to have a high robustness and reliability in withstanding high loads and extreme operating conditions that the belt 2 may be subject to, in use.

Moreover, the presence of the protective structure (meshes 33, 33B) coupled to the device 13 further enhances the robustness of the device 13 in withstanding high loads in extreme operating conditions.

Therefore, the belt 2 provided with the device 13 has a low risk of damaging or failure of the electronic module 15 and may be used in power transmission and products conveying applications (e.g., industrial logistics, food processing industry, postal and parcel services, heavy industries) wherein the belt 2 would be subject to high loads. For example, the device 13 may withstand extreme operating conditions such as temperatures above 180°C, high pressure exerted on the belt 2 (for example over knife transitions of the belt 2), and repeated bends of the belt 2.

It is clear that modifications can be made to the described belt without departing from the scope of protection of the present invention, as defined by the appended claims.

For example, the electronic module 15 may be an active device having one or more batteries.

For example, the electronic module 15 may be a transceiver and not a transponder.

The electronic module 15 may comprise other blocks or modules, for example one or more batteries, one or more sensors for measuring data indicative of the functioning of the belt 2, etc.

For example, the belt 2 may comprise more than one device 13.

For example, with reference to Figures 3 and 4, the orientation of the protruding portions 23 may be different, for example along axis Y, depending on the specific placement of the device 13 within the running body 6.

For example, the reinforcing structure of the device 13 may be formed by structures of a reinforcing material, supporting the electronic module 15 and the conductive wires 17 within the running body 6, having a different shape than the meshes 33A, 33B.

The described embodiments can be combined to provide further solutions.

## Claims

1. A belt (2) comprising:
- a running body (6); and
- a device (13) for radiofrequency communication, carried by the running body,
wherein the device comprises:
- an electronic module (15) configured to receive and transmit radiofrequency signals; and
- a plurality of conductive wires (17) inductively coupled with the electronic module and arranged so as to form a frame portion (20),
the electronic module (15) being arranged within the frame portion (20).

2. The belt according to the preceding claim, wherein the electronic module (15) is not in direct electrical contact with the frame portion (20).

3. The belt according to claim 1 or 2, wherein the frame portion (20) surrounds the electronic module (15).

4. The belt according to any of the preceding claims, wherein the plurality of conductive wires (17) comprises from two to five conductive wires, in particular four wires.

5. The belt according to any of the preceding claims, wherein the conductive wires (17) each have a thickness from 0.10 mm to 0.15 mm.

6. The belt according to any of the preceding claims, wherein the electronic module (15) comprises an integrated circuit (25) and an antenna (26) electrically coupled with each other, the conductive wires being inductively coupled with the antenna and configured to exchange radiofrequency signals with the antenna.

7. The belt according to any of the preceding claims, wherein the device (13) further comprises a reinforcing structure (33A, 33B), for example a mesh of fiber glass.

8. The belt according to any of the preceding claims, wherein the conductive wires are arranged so as to form at least one protruding portion (23) extending from the frame portion (20) away from the electronic module (15).

9. The belt according to any of the preceding claims, wherein the conductive wires (17) are twisted one with the other.

10. The belt according to any of the preceding claims, wherein the device (13) is embedded in the running body (6).
